# EUROPEAN PATENT APPLICATION

(11) **EP 2 220 982 A2**
(43) Date of publication of application: **25.08.2010**
(21) Application number: 10001346.5
(22) Date of filing: 10.02.2010
(51) Int. Cl.: A47J 43/24

(54) **Salad-drying centrifuge equipped wit colander drum**

(30) Priority: 12.02.2009 IT TO20090017
(71) Applicant: Mongardi, Paolo Serafino, 10098 Rivoli (TO) (IT)
(72) Inventor: Mongardi, Paolo Serafino, 10098 Rivoli (TO) (IT)
(74) Representative: Garavelli, Paolo

(57) **Abstract**

A salad-drying centrifuge (1) is described, composed of a container (3) containing therein at least one rotary drying drum (5), such container (3) being equipped with a cover (6) in which means for rotating the drum (5) are integrated, such drum (5) being actually a colander.

## Description

The present invention refers to a salad-drying centrifuge in which the internal rotary drying drum is actually a colander.

Salad-drying centrifuges are widely known in the art: such centrifuges are generally composed of a container inside which a drying drum is placed, rotated by a cover of such container normally equipped with a mechanism for rotating the drum itself.

In particular, the drying drum is equipped on its whole surface with a plurality of draining openings suitable to allow the passage of water that, through the centrifugal rotation of the drum, is removed by the salad and collected inside the container.

In order to use such centrifuge, it is therefore enough to place the salad (even if, in spite of the name, such salad-drying centrifuges are normally used for drying any other vegetable, fruit or the like) inside the drum, place the drum inside the container, arrange the cover on the container and in cooperation with the drum, and actuate the mechanism for rotating the drum (typically a driving toothed wheel equipped with a handle connected to the upper edge of the drum by interposing a series of gears that make a suitable transmission ratio, so that few revolutions of the driving toothed wheel correspond to a high number of revolutions of the drum, such as to allow the centrifugal operation of the salad-drying device).

Given the specific shape of the drying drum, and in particular the presence of draining openings, someone uses the drum itself also as colander, obtaining the double purpose of reducing the number of necessary kitchen tools and decreasing the necessary space for placing the tools. Such use as colander of known drying drums, however, is improper, scarcely functional, even dangerous, for a series of reasons: in fact, such drums, contrary to common colander, are without handles, this making rather difficult to correctly and comfortably grasp and keep the drum during the draining action.

Moreover, such drums, always contrary to common colanders, are without bearing feet, this preventing their bearing during the draining action on a bearing surface, usually the bottom of a basin, and making the draining operation difficult for a single person.

Moreover, in known drums, the draining openings usually have much greater sizes than the colander holes, these latter ones obviously calibrated for their specific use: it follows that, when draining through known drums, possible small-sized pasta or spaghetti can go out of the draining openings, implying an unavoidable waste of the product.

Therefore, object of the present invention is solving the above prior art problems by providing a salad-drying centrifuge in which the internal rotary drying drum is actually a colander.

Another object of the present invention is providing a salad-drying centrifuge in which the internal rotary drying drum is equipped with a gripping handle to facilitate its use as colander.

Another object of the present invention is providing a salad-drying centrifuge in which the internal rotary drying drum is equipped with protection sectors free from draining openings next to the handles, in such a way as to protect the user's hands from boiling water in the pasta during the draining operation.

Moreover, an object of the present invention is providing a salad-drying centrifuge in which the internal rotary drying drum is equipped with bearing feet to facilitate its use as colander.

Another object of the present invention is providing a salad-drying centrifuge in which the internal rotary drying drum is equipped with a plurality of draining openings with small sizes in order to prevent pasta from going out during the draining operation.

Moreover, an object of the present invention is providing a salad-drying centrifuge in which at least the container is made of a transparent or semi-transparent material to be able to be also used as salad vessel for a table and to allow reducing the number of kitchen tools.

The above and other objects and advantages of the invention, as will appear from the following description, are obtained with a salad-drying centrifuge equipped with colander drum as claimed in claim 1. Preferred embodiments and non-trivial variations of the present invention are the subject matter of the dependent claims.

The present invention will be better described by some preferred embodiments thereof, provided as a non-limiting example, with reference to the enclosed drawings, in which:

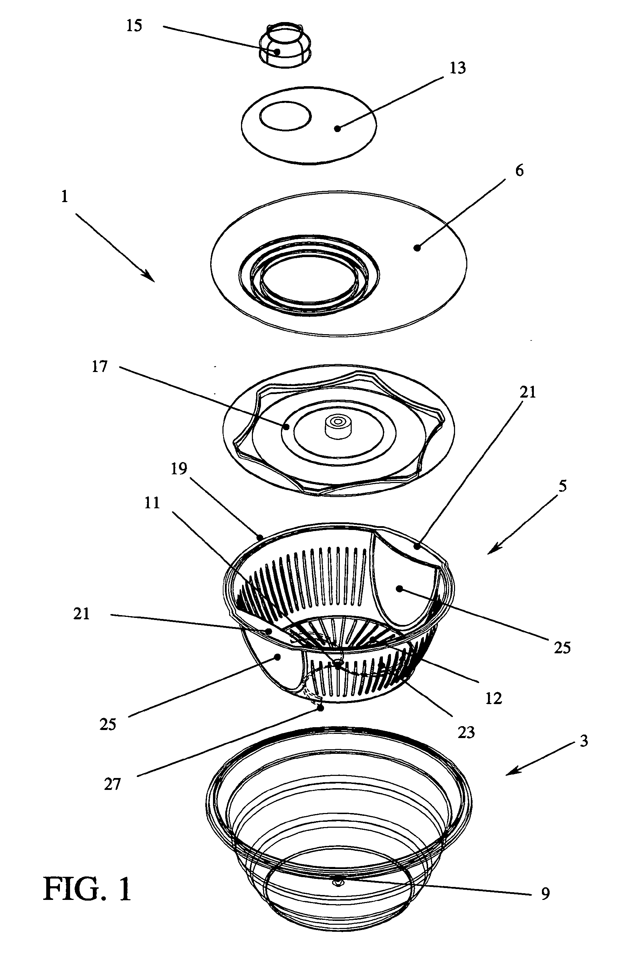

- Figure 1 shows an exploded perspective view of a preferred embodiment of the salad-drying centrifuge according to the present invention.

With reference to Figure 1, it is possible to note that the salad-drying centrifuge 1 according to the present invention is composed of a container 3 containing therein at least one rotary drying drum 5, such container 3 being equipped with a cover 6 in which means for rotating the drum 5 are integrated, of a substantially known type, such drum 5 being actually a colander. In particular, in order to facilitate the rotation of the drum 5, the container 3 is centrally equipped at its base with at least one rotation pin 9 on which a corresponding seat 11 is pivoted, placed on the base 12 of the drum 5.

Preferably, the means for rotating the drum 5 are made, as known, through at least one driving wheel 13 externally equipped with at least one actuating means, such as for example a knob 15, that, rotated by a user, cooperates with the drum 5, typically through a driven wheel 17 rotating inside the cover 6, connected to such driving wheel 13 and engaged on the upper edge 19 of the drum 5, in order to rotate this latter one: the angular rotation speed of the drum 5, depending on the angular speed impressed by the user to the driving wheel 13, is obviously function of the transmission ratio existing between the driving wheel 13 and the driven wheel 17. Obviously, the means for rotating can be made in any other way known in the art without departing from the scope of the present invention.

Advantageously, in order to allow a comfortable, practical and safe use as colander, the drum 5 is equipped along its own upper edge 19 with at least one pair of handles 21 arranged in diametrically opposite positions.

Obviously, the surface of the drum 5 is equipped with a plurality of draining openings 23: advantageously, the sizes of such openings 23 are such as to prevent pasta from going out during the draining operation; in particular, the sizes of such aperture 23 are less than the minimum sizes of the smallest pasta format existing on the market.

In a preferred embodiment thereof, the rotary drying drum 5 is equipped with protecting sectors 25 without draining openings 23 downstream of the handles 21, in such a way as to protect the user's hands from boiling water of the pasta during the draining operation.

In another preferred embodiment thereof, the base 12 of the rotary drying drum 5 is equipped with bearing feet 27: in this way, the drum 5, during its use as colander, can be stably rested onto a suitable surface, such as for example the bottom of a basin, to allow practically, comfortably and safely performing the draining operation even with a single person.

Advantageously, the container 3 of the salad-drying centrifuge 1 according to the present invention can be made of a transparent or semitransparent material, for example of the plastic type, in such a way as to be aesthetically pleasant and be able to be also used as salad vessel for a table.

## Claims

1. Salad-drying centrifuge (1) composed of a container (3) containing therein at least one rotary drying drum (5), said container (3) being equipped with a cover (6) in which means for rotating said drum (5) are integrated, **characterised in that** said drum (5) is a colander.

2. Salad-drying centrifuge (1) according to claim 1, **characterised in that** said container (3) is centrally equipped on a base thereof with at least one rotation pin (9) on which a corresponding seat (11) is pivoted, placed on a base (12) of said drum (5).

3. Salad-drying centrifuge (1) according to claim 1, **characterised in that** said drum (5) is equipped, along an upper edge (19) thereof, with at least one pair of handles (21).

4. Salad-drying centrifuge (1) according to claim 1, **characterised in that** said drum (5) is equipped with a plurality of draining openings (23) having smaller sizes that the minimum sizes of the smallest pasta format existing on the market.

5. Salad-drying centrifuge (1) according to claim 3 or 4, **characterised in that** said drum (5) is equipped with protecting sectors (25) free from said draining openings (23) downstream of said handles (21).

6. Salad-drying centrifuge (1) according to claim 1, **characterised in that** a base (12) of said drum (5) is equipped with bearing feet (27).

7. Salad-drying centrifuge (1) according to claim 1, **characterised in that** said container (3) is a salad vessel for a table.

8. Salad-drying centrifuge (1) according to claim 7, **characterised in that** said container (3) is made of a transparent or semitransparent material.
